# EUROPEAN PATENT SPECIFICATION

(11) **EP 2 501 223 B1**
(45) Date of publication and mention of the grant of the patent: **19.02.2014**
(21) Application number: 10781676.1
(22) Date of filing: 19.11.2010
(51) Int. Cl.: A01K 13/00, A01J 7/04, A63B 57/00

(54) **CLEANING DEVICE**
REINIGUNGSVORRICHTUNG
DISPOSITIF DE NETTOYAGE

(30) Priority: 20.11.2009 SE 0950886; 20.11.2009 US 263077 P
(43) Date of publication of application: 26.09.2012
(73) Proprietor: Pondactum AB, 240 40 Tjörnarp (SE)
(72) Inventor: JÖNSSON, Per-Erik, S-240 40 Tjörnarp (SE); OLSSON, Nils-Henrik, S-275 62 Blentarp (SE)
(74) Representative: Ström & Gulliksson AB
(86) International application number: PCT/EP2010/067850
(87) International publication number: WO 2011/061301

(56) References cited:
- EP-A1- 0 399 132
- WO-A1-99/05904
- DE-U1- 20 210 677
- DE-U1- 20 320 290
- DE-U1-202004 019 879
- US-A- 5 384 933

## Description

### Technical Field

This invention pertains in general to the field of cleaning devices. More particularly the invention relates to a device for cleaning a pet foot.

### Background

When a pet, such as a dog, is taken for a walk the feet of the dog often get dirty. When the dog is let into the house or car again the dirt is often transferred onto the floor of the house or car.

It is known in the art to use rotatable brushes for cleaning pets, in particular the feet of the pets.

For instance, DE-U-20212476 discloses a cleaning device where a pet foot may be inserted into an opening of a housing having rotating brushes arranged in parallel with the direction of the opening. By the rotation of the brushes it is intended that the dirt from the pet foot should be removed. However, DE-U-20212476 fails to suggest a device which is efficient in removing the dirt from the pet foot. One reason is that the pet foot is inserted through an opening in a direction in parallel with the axes of the rotatable brushes.

Another known device for cleaning pet feet is disclosed in DE-U-202004019879 where pivotable, rotatable brushes are used. However, this known device is complicated and does not provide an efficient way of cleaning pet feet from dirt. A particular disadvantage is that the pivotable brushes apply undesired forces/pressure to the pet feet. Further pet related cleaning devices are known from US-B-6745721, US-A-2009/0223008, CA-A-2282854, DE-A-20210677 and EP-A-399132. These known devices suffer from similar disadvantages as discussed above.

Hence, there is room for improvements, and a new type of cleaning device would be advantageous.

### Summary

Accordingly, the present invention seeks to mitigate, alleviate or eliminate the above-identified deficiencies and aims at solving at least some of the above mentioned problems by providing a cleaning device having the features of appended claims 1 and 2.

A particular object of the invention is to provide a cleaning device which enables efficient cleaning of an object, such as a pet foot, without damaging the object during cleaning.

According to an aspect of the invention, a cleaning device is provided according to claim 1.

According to another, alternative aspect, a cleaning device is provided according to claim 2.

Further embodiments of the invention are defined in the appended dependent claims.

### Brief Description of the Drawings

Further aspects, features and advantages of the present invention will be apparent from the following description of preferred embodiments of the invention, reference being made to the accompanying drawings which show non-limiting examples and in which:
Fig. 1 is a perspective view of a first part of a cleaning device according to an embodiment of the invention;
Fig. 2 is a top view of the first part of the cleaning device;
Fig. 3 is a transparent side view of the first part of the cleaning device shown in Figs 1-2;
Fig. 4 is a transparent side view, opposite in relation to Fig. 3, of the first part of the cleaning device according to Figs 1-3;
Fig. 5 is a perspective view of an outer housing of the cleaning device;
Fig. 6 is a side view of the outer housing of the cleaning device;
Fig. 7 is a transparent top view of the cleaning device according to an embodiment of the invention;
Fig. 8 is a transparent side view of the cleaning device;
Fig. 9 is a transparent side view of the cleaning device according to an embodiment of the invention;
Fig. 10 is a transparent side view of the cleaning device shown in Fig. 9;
Fig. 11 is a perspective view of the cleaning device according to an embodiment of the invention, said device being provided with a lid;
Fig. 12 is an exploded view of the components of the cleaning device according to an embodiment of the invention; and
Fig. 13 is an illustration showing the cleaning device when assembled.

### Description of Embodiments

The following description focuses on an embodiment applicable to a cleaning device and in particular to a cleaning device for cleaning a pet foot. However, it will be appreciated that the cleaning device is not limited to this application but may be applied to many other applications including for example cleaning of a human hand or cleaning of mechanical tools, such as spanners, wrenches, golf clubs etc.

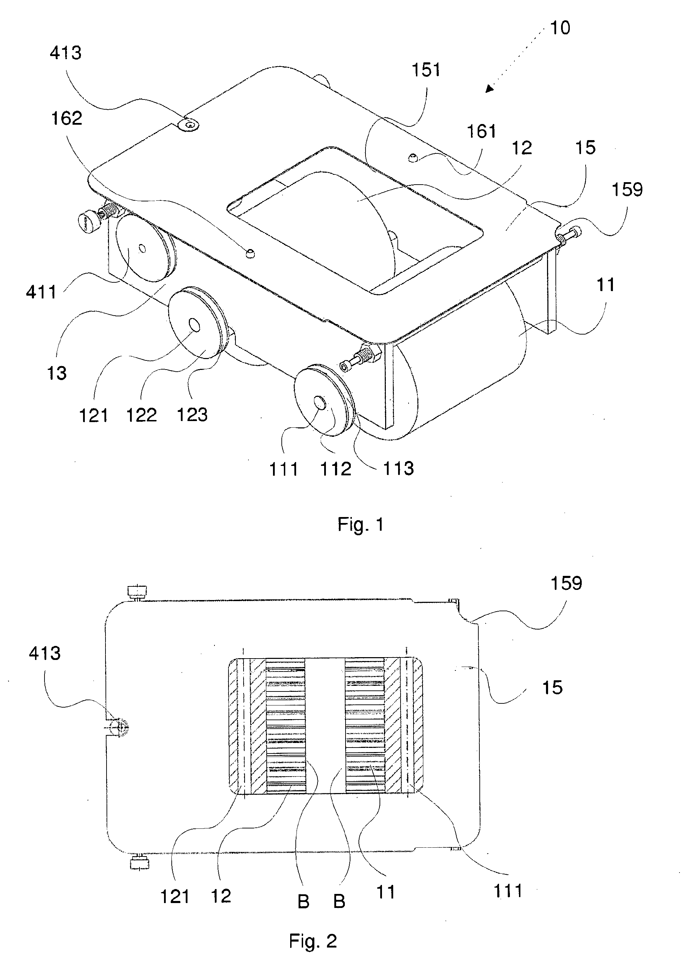

With reference to Fig. 1, a first part of a cleaning device 10 is shown. The cleaning device 10 has a first rotatable brush 11 and a second rotatable brush 12. The first brush 11 is rotatable around a first axis 111 and the second brush is rotatable around a second axis 121. The first rotatable brush 11 and the second rotatable brush 12 are arranged in parallel which means that the axes 111 and 112 are arranged in parallel.

Fig. 2 is a corresponding top view of the first part of the cleaning device 10.

The first 11 and/or second 12 brush may be any brush suitable for cleaning a pet foot, tool or the like. For example the brush 12 may have a set of bristles B protruding approximately 2 to 5 cm, such as 2 to 3 cm, from the brush axes 111, 121. However, the length of the bristles B may be varied depending on the cleaning process. Groups of bristles B may be provided in holes (not shown) provided in the brush axes 111, 121. The first 11 and/or second brush 12 may also comprise a sponge surface, respectively, or a rugged material suitable for cleaning (not shown)

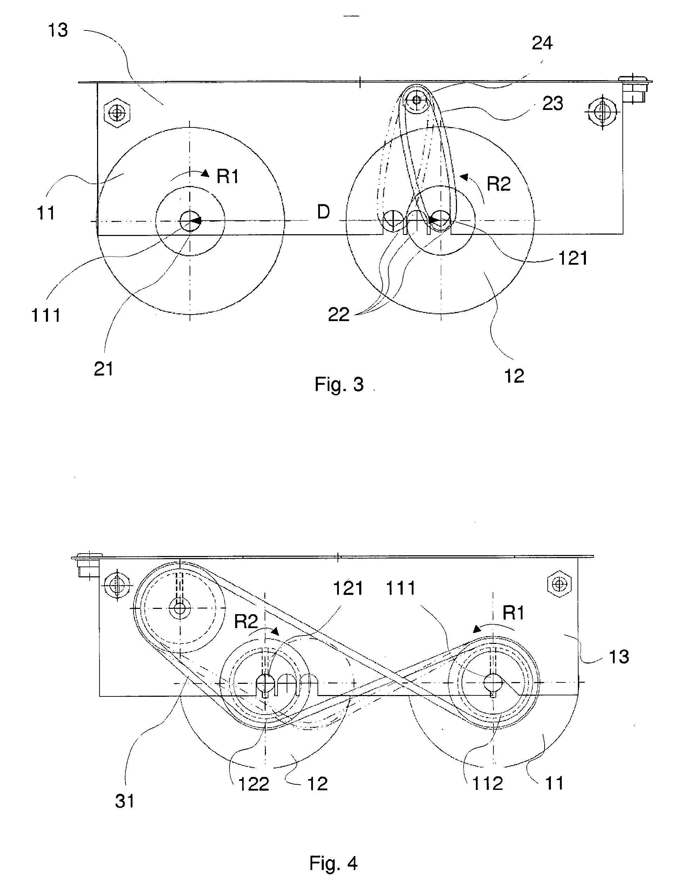

The first axis 111 fits into a first pair of recesses 21, such as holes or the like, provided at each side of a frame or housing 13, as is illustrated in Figs 3 and 4, where Fig. 3 is a side view of the first part of the cleaning device 10 and Fig. 4 illustrates the opposite side of the first part of the cleaning device 10.

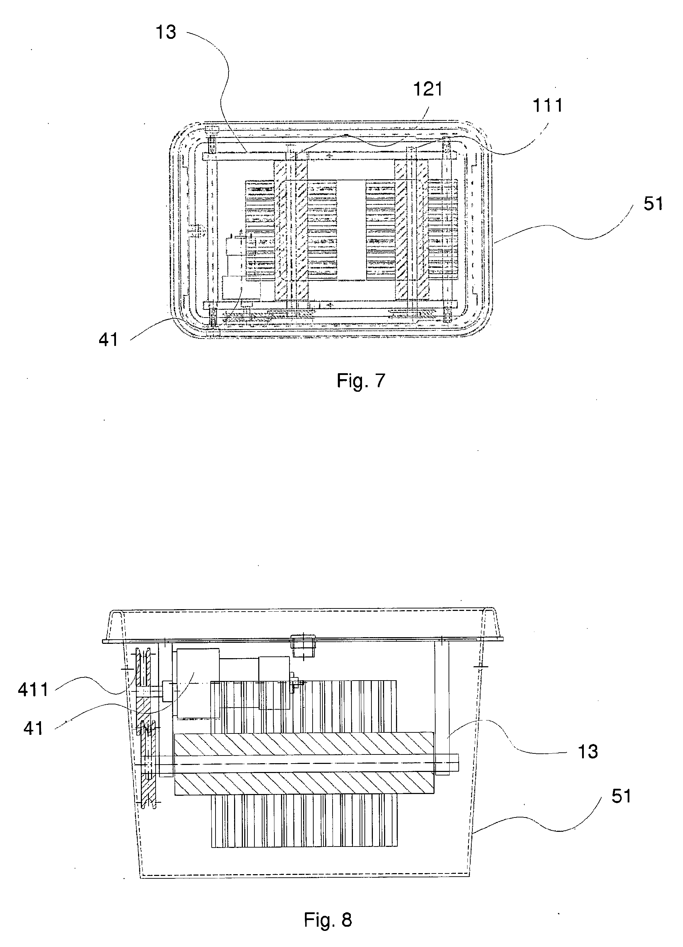

For example, one side of the housing 13 may be provided with a hole for insertion of the first axis 111 therein, while the other side of the housing 13 is provided with a recess into which the other side of the first axis 111 may be fitted, as is shown in Figs 3 and 4. The second axis 121 fits into a pair of a second set of recesses 22, provided at each side of the housing 13, as is illustrated in Figs 3 and 4. At one end of the first axis 111 a first drive wheel 112 is provided. A second drive wheel 122 is provided at one end of the second axis 121. The first drive wheel 112 and the second drive wheel 122 may be connected to a motor 41, as is illustrated in Figs 7 and 8, by means of a motor drive wheel 411. Fig. 7 is a transparent top view of the cleaning device 10. The positioning of the motor 41 is also illustrated in Fig. 8 which is a transparent end view of the cleaning device 10.

Each drive wheel 112, 122 may have a cylindrical shape with a recess 113, 123 circumferentially provided along the height of the cylindrical shape, into which a driving belt 31 may be provided. The first drive wheel 112 and the second drive wheel 122 may be connected to the motor drive wheel 411 by means of the driving belt 31, as is illustrated in Fig. 4. By arranging the driving belt 31 in a loop, meaning that seen from the side the driving belt 31 crosses itself, as is shown in Fig. 4, the first drive wheel 112 may rotate in an opposite direction in relation to the rotation of the motor drive wheel 411, and thus also in an opposite direction in relation to the second drive wheel 122. In this way the first brush 11 and the second brush 12 may be rotated in opposite directions.

The driving belt 31 thus enables the brushes 11, 12 to rotate by means of the connection to the motor drive wheel 411. The driving belt 31 may also be used to keep the first axis 111 and the second axis 121 in position in their respective pair of recesses.

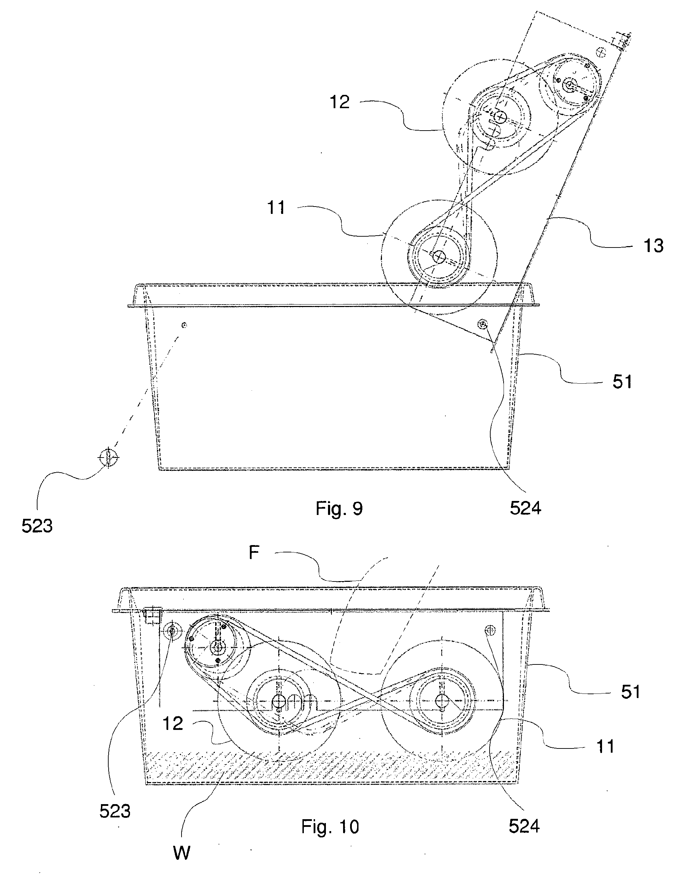

Furthermore the driving belt 31 is arranged in such a manner that when the load on the first brush 11 or second brush 12, such as resistance between an object F (see Fig. 10) and the first brush 11 or the second brush 12, is above a certain level, the driving belt 31 will slide towards the recesses in the first drive wheel 112 and the second drive wheel 122, whereby the first brush 11 and second brush 12 will stop rotating, guaranteeing that the object, such as a pet foot F, is not harmed. Such a driving belt 31 may be a round shaped driving belt.

The driving belt 31 may be made of a rubber or plastic material. It may also be somewhat flexible in order to facilitate mounting of the driving belt 31 to the drive wheels 112, 122. The driving belt 31 could also be a tooth shaped driving belt, wedge shaped driving belt or chain wherein the drive wheels are equipped with corresponding cogs (not shown).

The motor 41 can be arranged such that it is incapable of driving the driving belt 31 when a load, exceeding a maximum load level, is applied to the first 11 or second brush 12. Hence, the motor 41 is selected such that it will stop when the maximum load is exceeded. In this way, the risk of damaging the object F to be cleaned is drastically reduced. The motor 41 may also be connected to a sliding hub (not shown) in order to guarantee that the first and second brushes 11, 12 will stop rotating when a load exceeding the maximum load level is applied on the first 11 and/or second brush 12.

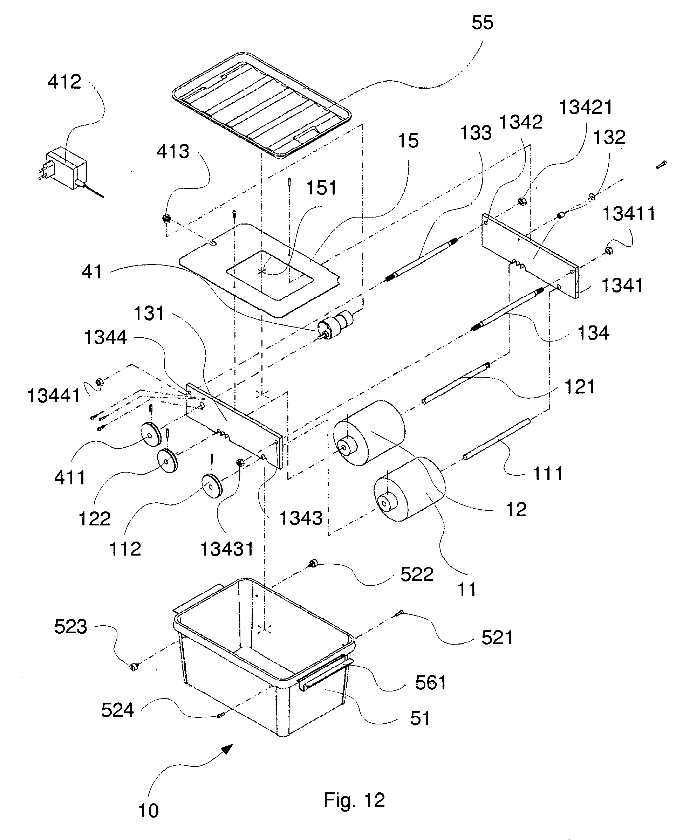

In an embodiment the motor 41 is connected to connector 413 by means of a wire (not shown). The connector 413 may be connected to an external power supply 412, such as an adaptor, providing current to the motor 41 for rotation of the first brush 11 or the second brush 12. The connector 413 is not limited to a position in the cover plate 15 as may be seen in Fig. 12 but may be placed at any suitable position in the cleaning device 10 enabling a user to plug in the adaptor to the connector 413.

Preferably, the motor 41 is powered by a 12V unit (not shown).

In an embodiment, the external power supply is a power supply of a vehicle, e.g. a boat or a car (not shown). The motor 41 may be connected to the external power supply 412 via the connector 413 to e.g. using the cigarette connector outlet of the vehicle. Thereby, the cleaning device 10 may be powered by the power supply of the vehicle. This makes the cleaning device 10 even more mobile.

In another embodiment, the motor 41 is connected to a battery pack (not shown), such as a rechargeable battery pack, situated adjacent to the motor 41 in the cleaning device 10. Hence, there is no need for connecting the motor 41 to an external power source via the connector 413, since the battery pack provides the motor 41 with a suitable driving current. However, the cleaning device 10 may also have both a connector 413 and a battery pack, such that when the battery pack is depleted the connector could be used to drive the motor 41. Optionally, the connector 413 may be used to recharge the battery pack. Hence, the user does not have to remove the battery pack from the cleaning device 10 during recharging.

In an embodiment, the cleaning device 10 is provided with an ON/OFF button (not shown) which acts as a switch for enabling/disabling current to the motor 41. Consequently, the motor 41 does not receive power from the battery pack or external power supply when the ON/OFF button is set to the OFF mode, thereby not enabling the motor 41 to drive the motor drive wheel 411. However, when the ON/OFF button is set to the ON mode the motor 41 is able to receive power from the battery pack or external power supply, thereby enabling the motor 41 to drive the motor drive wheel 411.

In an embodiment, the motor 41 may be a motor driven by pressurized air. For example, if pressurized air is available at the intended location of the cleaning device 10, this could be used to drive the motor 41.

The motor 41 may also be driven by hand, e.g. by means of a crank connected to the motor drive wheel 411 (not shown).

The first part of the cleaning device 10 further has a cover plate 15 with an opening 151 extending therethrough for insertion of an object to be cleaned, such as a pet foot F. When the pet foot is inserted through the opening 151 it comes into contact with the first brush 11 and the second brush 12. The rotational direction of the first brush 11 and the second brush 12 is arranged such that dirt from the pet foot F is directed away from the opening 151 and thus into the cleaning device 10. The rotational directions of the first brush 11 and the second brush 12 are shown in Figs 3, and 4 by arrows R1, R2. The cover plate 15 is attached to the housing 13 by any suitable attachment means, such as screws or nails 161, 162.

In an embodiment, the edge of the opening 151 in the cover plate 15 is lined with a material to protect the object F to be cleaned from cuts and scratches, which could arise if the edge of the opening 151 is sharp.

As shown Fig. 3, there is provided a support belt 23 arranged in a loop around the end of the second axis 121, e.g. in a recess circumferentially provided in the end of the second axis 121, and around a support knob 24 attached to the housing 13. The support belt 23 serves to keep the end of the second axis 121 in one of the recesses of the second set of recesses 22 provided at one side of the housing 13.

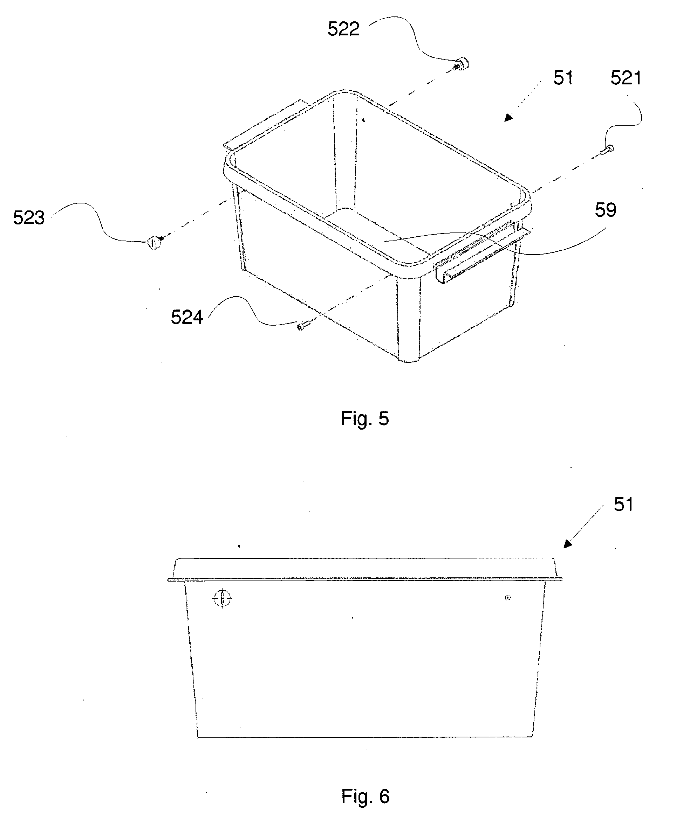

The first part of the cleaning device 10 may be inserted into an outer housing 51, as is shown in Figs 5 and 6 where Fig. 5 illustrates the outer housing 51 seen from an angle, while Fig. 6 illustrates the outer housing 51 seen from the side. The first part of the cleaning device 10 may be attached to the outer housing 51 by means of any suitable fastening means, such as screws or nails 521, 522, 523, 524. A corresponding hole or threaded part is provided in the housing 13, whereby the outer housing 51 may be attached to the inner housing 13.

Fig. 9 illustrates the cleaning device 10 in a transparent side view, wherein the outer housing 51 is attached to the housing 13 by two fastening means, such as nails 521, 524. When attached the two fastening means 521, 524, act as hinges enabling the first part of the cleaning device 10 to be rotated in relation to the outer housing, in order to gain access to the components, such as driving belt 31 etc, even when the housing 13 is connected to the outer housing 51.

Moreover, this feature of rapidly gaining access to the components of the cleaning device 10 enables the user to easily shift between the recesses of the second set of recesses 22 in order to change the perpendicular distance D between the first axis 111 and second axis 121 (see Fig. 3), and thus the perpendicular distance between the first brush 11 and second brush 12, and in this way adapt the cleaning device 10 for different sizes of objects to be cleaned. A larger distance D between the first axis 111 and the second axis 121 allows for efficiently cleaning a larger object F, while a smaller distance D allows for cleaning a smaller object F.

Fig. 10 illustrates the cleaning device 10 when assembled seen from a transparent side view. In Fig. 10 the two fastening means 522 and 523 have been attached to the housing 13.

According to an embodiment, before use the cleaning device 10 is filled with a cleaning agent W, such as water, and optionally a detergent. The cleaning agent W may be poured through the opening 151 in the cover plate 11 down towards the interior bottom 59 of the outer housing 51 and up to a level at which the cleaning agent W comes into contact with the first brush 11 or the second brush 12; or both brushes 11, 12 (schematically shown in Fig. 10). By means of the cleaning agent W the cleaning of the object F, such as pet foot, is drastically improved.

In an embodiment the motor 41 is sealed with a shrinking tubing (not shown), thereby protecting the motor 41 from cleaning agent or dirt.

The cover plate 15 may in one corner be provided with a cut-out 159, as is shown in Figs 1 and 2, enabling an exit opening in relation to the outer housing 51, though which used cleaning agent W may be poured out of the cleaning device 10. The cut-out 159 is preferably provided at the side of the cover plate 15 opposite the location of the motor 41, to prevent unnecessary contact between the cleaning agent W and the motor 41.

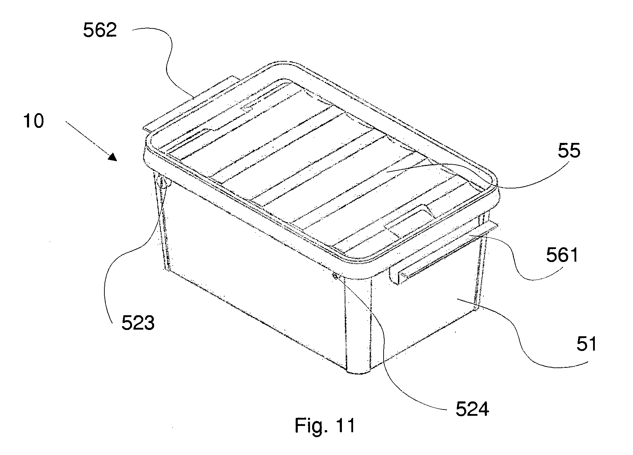

Fig. 11 shows the assembled cleaning device 10 onto which a lid 55 is placed over the cover plate 15. The lid 55 may be attached to the outer housing 51 of the cleaning device 10 by means of two fastening clips 561, 562. When the lid 55 is safely attached to the outer housing 51, the cleaning agent W, optionally comprised in the cleaning device 10, is prevented from exiting the cleaning device 10. This allows the cleaning device 10 to be transported without the risk that the cleaning agent W unintentionally exits the cleaning device 10.

Fig. 12 illustrates an exploded view of the cleaning device 10 with all possible components. From Fig. 12 it may be observed that the housing 13 may have a first side 131 and a second side 132, attached together by means of two attachment bars 133, 134 provided therebetween. The attachment bars 133 and 134 may at each of their ends be mounted through attachment holes 1341, 1342 provided in the first side 131 of the housing 13 and through attachment holes 1343, 1344 provided in the second side 132 of the housing 13. The attachment bars 133, 134 may have a threaded portion at their ends enabling a corresponding threaded bolt 13411, 13421, 13431, 13441 to attach the two sides 131, 132 together when the attachment bars have been inserted through the attachment holes 1341, 1342, 1343, 1344.

The cleaning device 10 operates in the following way. A pet foot F is inserted in the opening 151 and is drawn into the housing 13, 51 by the rotation of the brushes 11, 12 rotating in opposite directions. The insertion direction is substantially perpendicular to the axes 111, 121 of the brushes 11, 12 and the axes 111, 121 are parallel to each other (see Fig. 10).

It should be appreciated that the rotational speeds of the first 111 and second 121 axes, and thereby the first and second brushes 11, 12, may be selected for different cleaning purposes. Hence, the rotational speed may be selected to a lower level when utilizing the device when cleaning a pet foot, while the rotational speed may be higher e.g. when utilizing the cleaning device for cleaning a tool, golf club etc.

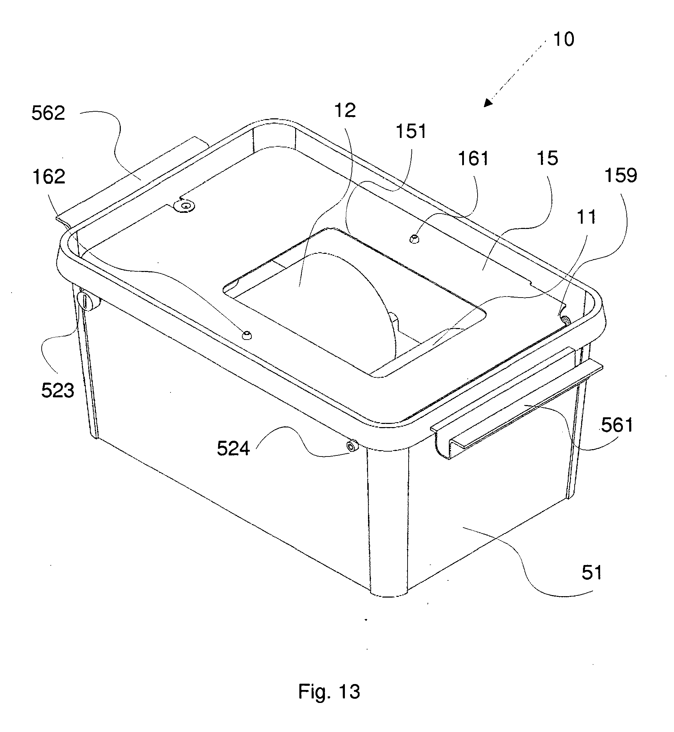

Fig. 13 illustrates the cleaning device 10 when assembled, seen from an angle.

Although the present invention has been described above with reference to specific embodiments, it is not intended to be limited to the specific form set forth herein. Rather, the invention is limited only by the appended claims.

## Claims

1. A cleaning device comprising:
a housing (13, 51) having an opening (151) for insertion of an object (F) into the cleaning device (10);
a first brush (11) which is arranged in the housing (13, 51) and which is rotatable about a first axis (111); and
a second brush (12) which is arranged in the housing (13, 51) and which is rotatable about a second axis (121);
wherein said brushes (11, 12) are arranged in such a way that an object (F) inserted through the opening (151) is drawn into the cleaning device (10) by rotation of the brushes (11, 12) in a direction from the opening (151) into the housing (13, 51).
**characterised in that** a motor (41) is provided within the housing (13, 51) and configured to rotate the first brush (11) and the second brush (12) by means of a driving belt (31), said motor (41) being connected to a motor drive wheel (411) for driving the driving belt (31), wherein the driving belt (31) is configured to slide along a first drive wheel (112) mounted to an end of the first axis (11) and a second drive wheel (122) mounted to an end of the second axis (12) when a certain level of resistance between the object (F) and the first brush (11) or the second brush (12) is exceeded, in order to enable cleaning of said object (F) without damaging it during cleaning.

2. A cleaning device comprising:
a housing (13, 51) having an opening (151) for insertion of an object (F) into the cleaning device (10);
a first brush (11) which is arranged in the housing (13, 51) and which is rotatable about a first axis (111); and
a second brush (12) which is arranged in the housing (13, 51) and which is rotatable about a second axis (121);
wherein said brushes (11, 12) are arranged in such a way that an object (F) inserted through the opening (151) is drawn into the cleaning device (10) by rotation of the brushes (11, 12) in a direction from the opening (151) into the housing (13, 51).
**characterised in that** a motor (41) is provided within the housing (13, 51) and configured to rotate the first brush (11) and the second brush (12) by means of a driving belt (31), said motor (41) being connected to a motor drive wheel (411) for driving the driving belt (31), wherein the motor (41) is configured to stop rotation of the motor drive wheel (411) when a certain level of resistance between the object (F) and the first brush (11) or the second brush (12) is exceeded, in order to enable cleaning of said object (F) without damaging it during cleaning.

3. A cleaning device according to claim 1 or 2, wherein the housing (13) is provided with a first pair of recesses (21) for receiving the first axis (111), and a set of second recesses (22) for receiving the second axis (121), the distance (D) between the first axis (111) and the second axis (121) preferably being adjustable based on a selection of two recesses of the set of second recesses (22).

4. A cleaning device according to any of the preceding claims, wherein the first brush (11) has a rotational direction which is opposite the rotational direction of the second brush (12).

5. A cleaning device according to any one of the preceding claims, comprising an outer housing (51) which in use incorporates an inner housing (13) to which the first brush (11), the second brush (12), the motor (41), or a cover plate (15) is connected, said outer housing (51) preferably being attached to the inner housing (13) by two fastening means (561, 562) acting like hinges and enabling the inner housing (13) and its associated components to be rotated in relation to the outer housing (51).

6. A cleaning device according to any one of the preceding claims, wherein the housing (51) is configured to contain a cleaning agent (W), said housing (13, 51) preferably being provided with a cut-out (159) which constitutes an outlet opening in relation to the outer housing (51), through which cleaning agent (W) may be poured out from the cleaning device (10).

7. A cleaning device according to any one of the preceding claims, further comprising a lid (55) configured to be placed over the opening (151).

8. A cleaning device according to any one of the preceding claims, wherein the first brush (11) or the second brush (12) is made of a flexible material, said brushes (11, 12) preferably comprising a sponge-like or rugged surface.

9. A cleaning device according to any one of the preceding claims, wherein the first brush (11) or the second brush (12) comprises a set of bristles (B) protruding from the first brush axis (111) or the second brush axis (121), said protrusion preferably being approximately 2-5 cm and most preferred about 2-3 cm.

10. A cleaning device according to any one of preceding claims, wherein the motor (41) is powered by means of a battery pack, an external power supply (412) via a connector (413), or by pressurized air.

11. A cleaning device according to claim 10, wherein the battery pack is a rechargeable battery pack, and wherein the connector (413) is connected to the battery pack, whereby the battery pack may be recharged by means of an external power supply (412) connected to the connector (413).

12. A cleaning device according to any one of the preceding claims, further comprising a cover plate (15) including said opening (151), said cover plate (15) preferably being attached to the housing (13,51).

## Patentansprüche

1. Eine Reinigungsvorrichtung umfassend:
ein Gehäuse (13, 51) mit einer Öffnung (151) zum Einführen eines Gegenstands (F) in die Reinigungsvorrichtung (10);
eine erste Bürste (11), die in dem Gehäuse (13, 51) angeordnet ist und um eine erste Achse (111) rotierbar ist; und
eine zweite Bürste (12), die in dem Gehäuse (13, 51) angeordnet ist und um eine zweite Achse (121) rotierbar ist:
wobei die besagten Bürsten (11, 12) derart angeordnet sind, dass ein Gegenstand (F), der durch die Öffnung (151) eingeführt wird, durch die Rotation der Bürsten (11, 12) von der Öffnung (151) in Richtung des Gehäuses (13, 51) in die Reinigungsvorrichtung (10) hineingezogen wird,
**dadurch gekennzeichnet, dass** sich innerhalb des Gehäuses (13, 51) ein Motor (41) befindet und dieser derart gestaltet ist, dass er die erste Bürste (11) und die zweite Bürste (12) mittels eines Antriebsriemens (31) rotiert, wobei der besagte Motor (41) mit einem Motorantriebsrad (411) verbunden ist, um den Antriebsriemen (31) anzutreiben, wobei der Antriebsriemen (31) derart gestaltet ist, dass er entlang einem ersten Antriebsrad (112), das an einem Ende der ersten Achse (11) angebracht ist und einem zweiten Antriebsrad (122), das an einem Ende der zweiten Achse (12) angebracht ist, gleitet, wenn ein bestimmter Widerstandswert zwischen dem Gegenstand (F) und der ersten Bürste (11) oder der zweiten Bürste (12) überschritten wird, um eine Reinigung des besagten Gegenstand (F) zu ermöglichen ohne diesen während der Reinigung zu beschädigen.

2. Eine Reinigungsvorrichtung umfassend:
ein Gehäuse (13, 51) mit einer Öffnung (151) zum Einführen eines Gegenstands (F) in die Reinigungsvorrichtung (10);
eine erste Bürste (11), die in dem Gehäuse (13, 51) angeordnet ist und um eine erste Achse (111) rotierbar ist; und
eine zweite Bürste (12), die in dem Gehäuse (13, 51) angeordnet ist und um eine zweite Achse (121) rotierbar ist:
wobei die besagten Bürsten (11, 12) derart angeordnet sind, dass ein Gegenstand (F), der durch die Öffnung (151) eingeführt wird, durch die Rotation der Bürsten (11, 12) von der Öffnung (151) in Richtung des Gehäuses (13, 51) in die Reinigungsvorrichtung (10) hineingezogen wird,
**dadurch gekennzeichnet, dass** sich innerhalb des Gehäuses (13, 51) ein Motor (41) befindet und dieser derart gestaltet ist, dass er die erste Bürste (11) und die zweite Bürste (12) mittels eines Antriebsriemens (31) rotiert, wobei der besagte Motor (41) mit einem Motorantriebsrad (411) verbunden ist, um den Antriebsriemen (31) anzutreiben, wobei der Motor (41) derart gestaltet ist, dass die Rotation des Motorantriebsrad (411) unterbrochen wird, wenn ein bestimmter Widerstandswert zwischen dem Gegenstand (F) und der ersten Bürste (11) oder der zweiten Bürste (12) überschritten wird, um eine Reinigung des besagten Gegenstand (F) zu ermöglichen ohne diesen während der Reinigung zu beschädigen.

3. Eine Reinigungsvorrichtung gemäß Anspruch 1 oder 2, wobei das Gehäuse (13) ein erstes Paar Aussparungen (21) zur Aufnahme der ersten Achse (111), und einen Satz von zweiten Aussparungen (22) zur Aufnahme der zweiten Achse (121) aufweist, wobei der Abstand (D) zwischen der ersten Achse (111) und der zweiten Achse (121) bevorzugt durch Wahl von zwei Aussparungen aus dem Satz von zweiten Aussparungen (22) einstellbar ist.

4. Eine Reinigungsvorrichtung gemäß einem der vorherigen Ansprüche, wobei die Bürste (11) eine Rotationsrichtung aufweist, die entgegengesetzt zu der Rotationsrichtung der zweiten Bürste (12) ist.

5. Eine Reinigungsvorrichtung gemäß einem der vorherigen Ansprüche umfassend ein äußeres Gehäuse (51), das bei Gebrauch ein inneres Gehäuse (13) aufnimmt mit welchem die erste Bürste (11), die zweite Bürste (12), der Motor (41), oder eine Abdeckplatte (15) verbunden ist, wobei das besagte äußere Gehäuse (51) bevorzugt mit zwei Befestigungsmitteln (561, 562) an dem inneren Gehäuse (13) angebracht ist, die als Scharniere dienen und eine Rotationsbewegung des inneren Gehäuses (13) und der dazu gehörenden Komponenten relativ zu dem äußeren Gehäuse (51) ermöglichen.

6. Eine Reinigungsvorrichtung gemäß einem der vorherigen Ansprüche, wobei das Gehäuse (51) derart gestaltet ist, dass es ein Reinigungsmittel (W) enthält, wobei das besagte Gehäuse (13, 51) bevorzugt einen Ausschnitt (159) aufweist, welcher eine Austrittsöffnung in Bezug auf das äußere Gehäuse (51) bildet durch welche das Reinigungsmittel (W) aus der Reinigungsvorrichtung (10) abgegossen werden kann.

7. Eine Reinigungsvorrichtung gemäß einem der vorherigen Ansprüche ferner umfassend einen Deckel (55) welcher derart gestaltet ist, dass er oberhalb der Öffnung (151) angebracht wird.

8. Eine Reinigungsvorrichtung gemäß einem der vorherigen Ansprüche, wobei die erste Bürste (11) oder die zweite Bürste (12) aus einem flexiblen Material bestehen, wobei die besagten Bürsten (11, 12) bevorzugt eine schwammartige oder raue Oberfläche umfassen.

9. Eine Reinigungsvorrichtung gemäß einem der vorherigen Ansprüche, wobei die erste Bürste (11) oder die zweite Bürste (12) einen Satz Borsten (B) umfasst, der von der ersten Bürstenachse (111) oder der zweiten Bürstenachse (121) übersteht, wobei der Überstand bevorzugt etwa 2 - 5 cm und am meisten bevorzugt etwa 2-3 cm beträgt.

10. Eine Reinigungsvorrichtung gemäß einem der vorherigen Ansprüche, wobei der Motor (41) durch einen Batteriesatz, durch eine externe Stromversorgung (412) über einen Anschluss (413) oder mittels Druckluft angetrieben wird.

11. Eine Reinigungsvorrichtung gemäß einem der vorherigen Ansprüche, wobei der Batteriesatz ein wiederaufladbarer Batteriesatz ist und wobei der Anschluss (413) mit dem Batteriesatz verbunden ist, wodurch der Batteriesatz mittels externer Stromversorgung (412), die mit den Anschluss (413) verbunden ist, wieder aufgeladen werden kann.

12. Eine Reinigungsvorrichtung gemäß einem der vorherigen Ansprüche ferner umfassend eine Abdeckplatte (15), welche die besagte Öffnung (151) einschließt, wobei die besagte Abdeckplatte (15) bevorzugt an dem Gehäuse (13, 51) angebracht ist.

## Revendications

1. Dispositif de nettoyage comprenant :
un logement (13, 51) ayant une ouverture (151) permettant l'insertion d'un objet (F) dans le dispositif de nettoyage (10) ;
une première brosse (11) qui est agencée dans le logement (13, 51) et qui peut tourner autour d'un premier axe (111) ; et
une seconde brosse (12) qui est agencée dans le logement (13, 51) et qui peut tourner autour d'un second axe (121) ;
dans lequel lesdites brosses (11, 12) sont agencées d'une manière telle qu'un objet (F) inséré au travers de l'ouverture (151) est tiré dans le dispositif de nettoyage (10) par la rotation des brosses (11, 12), dans une direction allant de l'ouverture (151) dans le logement (13, 51),
**caractérisé en ce qu'**un moteur (41) est prévu à l'intérieur du logement (13, 51) et configuré pour faire tourner la première brosse (11) et la seconde brosse (12) au moyen d'une courroie d'entraînement (31), ledit moteur (41) étant relié à une roue d'entraînement motorisée (411) destinée à entraîner la courroie d'entraînement (31), dans lequel la courroie d'entraînement (31) est configurée pour glisser le long d'une première roue d'entraînement (112) montée à une extrémité du premier axe (11) et d'une seconde roue d'entraînement (122) montée à une extrémité du second axe (12) lorsqu'un certain niveau de résistance entre l'objet (F) et la première brosse (11) ou la seconde brosse (12) est dépassé, afin de permettre le nettoyage dudit objet (F) sans que celui-ci soit endommagé au cours du nettoyage.

2. Dispositif de nettoyage comprenant :
un logement (13, 51) ayant une ouverture (151) permettant l'insertion d'un objet (F) dans le dispositif de nettoyage (10) ;
une première brosse (11) qui est agencée dans le logement (13, 51) et qui peut tourner autour d'un premier axe (111) ; et
une seconde brosse (12) qui est agencée dans le logement (13, 51) et qui peut tourner autour d'un second axe (121) ;
dans lequel lesdites brosses (11, 12) sont agencées d'une manière telle qu'un objet (F) inséré par l'ouverture (151) est tiré dans le dispositif de nettoyage (10) par la rotation des brosses (11, 12), dans une direction allant de l'ouverture (151) dans le logement (13, 51),
**caractérisé en ce qu'**un moteur (41) est prévu à l'intérieur du logement (13, 51) et configuré pour faire tourner la première brosse (11) et la seconde brosse (12) au moyen d'une courroie d'entraînement (31), ledit moteur (41) étant relié à une roue d'entraînement motorisée (411) destinée à entraîner la courroie d'entraînement (31), dans lequel le moteur (41) est configuré pour arrêter la rotation de la roue d'entraînement motorisée (411) lorsqu'un certain niveau de résistance entre l'objet (F) et la première brosse (11) ou la seconde brosse (12) est dépassé, afin de permettre le nettoyage dudit objet (F) sans que celui-ci soit endommagé au cours du nettoyage.

3. Dispositif de nettoyage selon la revendication 1 ou 2, dans lequel le logement (13) est pourvu d'une paire de premiers retraits (21) destinés à recevoir le premier axe (111) et d'un jeu de seconds retraits (22) destinés à recevoir le second axe (121), la distance (D) entre le premier axe (111) et le second axe (121) étant de préférence réglable en fonction d'une sélection de deux retraits du jeu de seconds retraits (22).

4. Dispositif de nettoyage selon l'une quelconque des revendications précédentes, dans lequel la première brosse (11) a un sens de rotation qui est opposé au sens de rotation de la seconde brosse (12).

5. Dispositif de nettoyage selon l'une quelconque des revendications précédentes, comprenant un logement externe (51) qui, en service, intègre un logement interne (13) auquel est relié la première brosse (11), la seconde brosse (12), le moteur (41) ou une plaque de protection (15), ledit logement externe (51) étant de préférence fixé au logement interne (13) par deux moyens de fixation (561, 562) agissant comme des charnières et permettant au logement interne (13) et aux éléments qui lui sont associés de tourner par rapport au logement externe (51).

6. Dispositif de nettoyage selon l'une quelconque des revendications précédentes, dans lequel le logement (51) est configuré pour contenir un agent de nettoyage (W), ledit logement (13, 51) étant pourvu de préférence d'une découpe (159) qui constitue une ouverture de sortie par rapport au logement externe (51), à travers laquelle un agent de nettoyage (W) peut s'écouler à partir du dispositif de nettoyage (10).

7. Dispositif de nettoyage selon l'une quelconque des revendications précédentes, comprenant en outre un couvercle (55) configuré pour être placé sur l'ouverture (151).

8. Dispositif de nettoyage selon l'une quelconque des revendications précédentes, dans lequel la première brosse (11) ou la seconde brosse (12) est réalisée dans un matériau souple, lesdites brosses (11, 12) comprenant de préférence une surface de type éponge ou rugueuse.

9. Dispositif de nettoyage selon l'une quelconque des revendications précédentes, dans lequel la première brosse (11) ou la seconde brosse (12) comprend un ensemble de poils (B) en saillie à partir du premier axe de brosse (111) ou du second axe de brosse (121), ladite saillie mesurant de préférence environ 2 à 5 cm et de manière préférée entre toutes environ 2 à 3 cm.

10. Dispositif de nettoyage selon l'une quelconque des revendications précédentes, dans lequel le moteur (41) est alimenté au moyen d'un bloc-piles, d'une alimentation externe (412) via un connecteur (413), ou par de l'air comprimé.

11. Dispositif de nettoyage selon la revendication 10, dans lequel le bloc-piles est un bloc-piles rechargeable, et dans lequel le connecteur (413) est connecté au bloc-piles, moyennant quoi le bloc-piles peut être rechargé au moyen d'une alimentation externe (412) connectée au connecteur (413).

12. Dispositif de nettoyage selon l'une quelconque des revendications précédentes, comprenant en outre une plaque de protection (15) comportant ladite ouverture (151), ladite plaque de protection (15) étant de préférence fixée au logement (13, 51).
